# EUROPEAN PATENT SPECIFICATION

(11) **EP 1 597 157 B1**
(45) Date of publication and mention of the grant of the patent: **23.05.2007**
(21) Application number: 04715118.8
(22) Date of filing: 26.02.2004
(51) Int. Cl.: B65D 1/02, B29C 49/02

(54) **METHOD OF MANUFACTURE OF A CONTAINER ASSEMBLY**
VERFAHREN ZUR HERSTELLUNG EINER BEHÄLTERANORDNUNG
PROCEDE DE PRODUCTION D'UN ENSEMBLE CONTENEUR

(30) Priority: 26.02.2003 US 375736
(43) Date of publication of application: 23.11.2005
(73) Proprietor: Graham Packaging PET Technologies Inc., York, PA 17402 (US)
(72) Inventor: NAHILL, Thomas, E., Amherst, NH 03031 (US); LYNCH, Brian, A., Merrimack, NH 03054 (US)
(74) Representative: Jenkins, Peter David
(86) International application number: PCT/US2004/005888
(87) International publication number: WO 2004/076299

(56) References cited:
- EP-A- 0 298 273
- EP-A- 0 641 718
- JP-A- 52 103 283
- US-A- 3 787 547
- US-A- 4 366 015
- PATENT ABSTRACTS OF JAPAN vol. 018, no. 065 (M-1554), 3 February 1994 (1994-02-03) -& JP 05 285943 A (DAINIPPON PRINTING CO LTD), 2 November 1993 (1993-11-02)

## Description

The present invention is directed to methods of making preforms for blow molding plastic containers.

### Background and Summary of the Invention

In the manufacture of plastic containers, it is conventional to injection mold or compression mold a container preform having a body and a neck finish with one or more external threads. The neck finish typically is molded to its final geometry, while the body of the preform is subsequently blow molded to the desired geometry of the container body. The preform may be of monolayer construction, or may be of multilayer construction in which one or more intermediate layers in the preform body may or may not extend into the finish area of the preform. US. Patents 4,609,516, 4,710,118 and 4,954,376 illustrate injection molding of multilayer container preforms.

Molding the neck finish portion of the container as part of the preform presents a number of problems. For example, when the preforms are formed by injection molding, the plastic material typically is injected into a mold cavity at the closed end of the preform body, so that the material must flow along the sides of the preform cavity into the area in which the neck finish is molded. The finish typically requires more accurate and stable dimensioning than the body of the preform, which may limit the cycle time of the molding process. Furthermore, the neck finish portion of the preform is of the same material as at least the outer layers of the preform body, which limits the ability to obtain the most desirable characteristics at the finish. When the preform is of polyester construction, such as polyethylene terephthalate (PET), the neck finish portion of the preform can be wholly or partially crystallized to improve the operating characteristics of the finish area, particularly in hot-fill container applications. However, the requirement that the neck finish be of the same material s at least the outer layers of the preform body still limits the design capabilities of preform manufacture.

EP-A-0641718 discloses a method for producing a tubular article having the features of the pre-characterising portion of claim 1.

JP-A-5-285943 discloses a preform having a cap section, a body section and a bottom section; and an insert component of heat-resistant resin disposed on the outer periphery of the cap section.

The present invention provides a method of making an assembly that includes the steps of: (a) providing a molded plastic article that has an open mouth, a neck surrounding said mouth with an external surface at a first diameter, an external flange at one end of said neck surrounding said mouth, and a body integrally molded with said neck at an end of said neck spaced from said flange, said body having a second external diameter greater than said first diameter; (b) providing a circumferentially continuous molded plastic finish ring, and (c) assembling said finish ring to said article wherein the assembly is a preform assembly, the article is a preform, and the body is a preform body, and in that the assembling step (c) is carried out by stretching said finish ring while warm over said external flange to locate said finish ring over said external surface of said neck and by shrinkage of said ring onto said neck as said ring cools such that said ring is secured to said neck between said flange and said body by interference shrink fit.

### Brief Description of the Drawings

The invention, together with additional objects, features, advantages and aspects thereof, will be best understood from the following description, the appended claims and the accompanying drawings, in which:
FIG. 1 is a perspective view of a preform assembly made in accordance with one exemplary presently preferred embodiment of the invention;
FIG. 2 is a perspective view of the preform in the assembly of FIG. 1;
FIGS. 3 and 4 are perspective views that illustrate sequential stages of assembly of the preform assembly of FIG. 1; and
FIG. 5 is a fragmentary sectional view of a portion of Fig. 4.

### Detailed Description of Preferred Embodiments

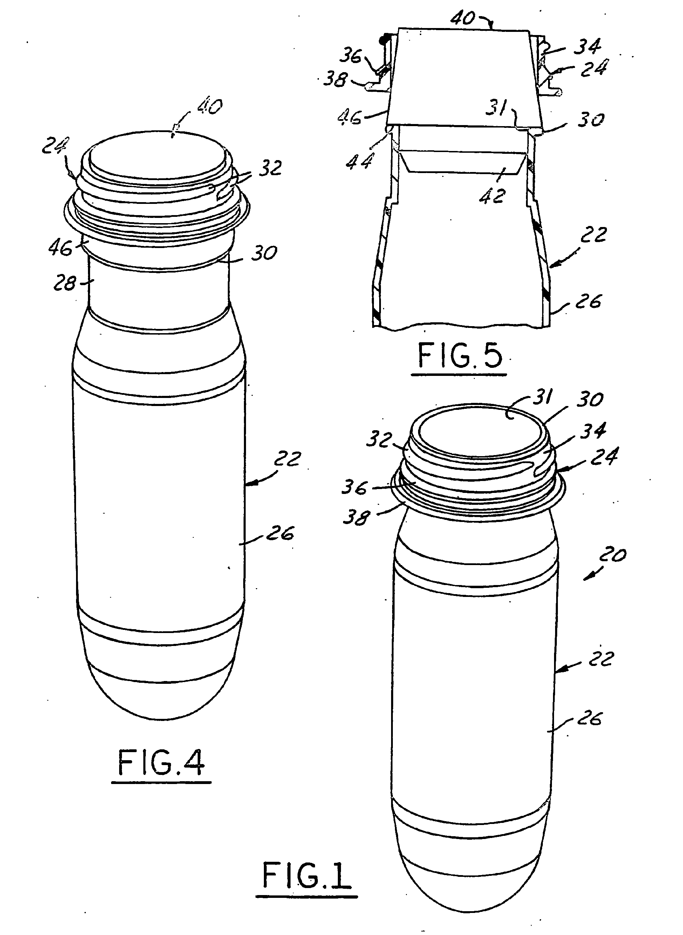

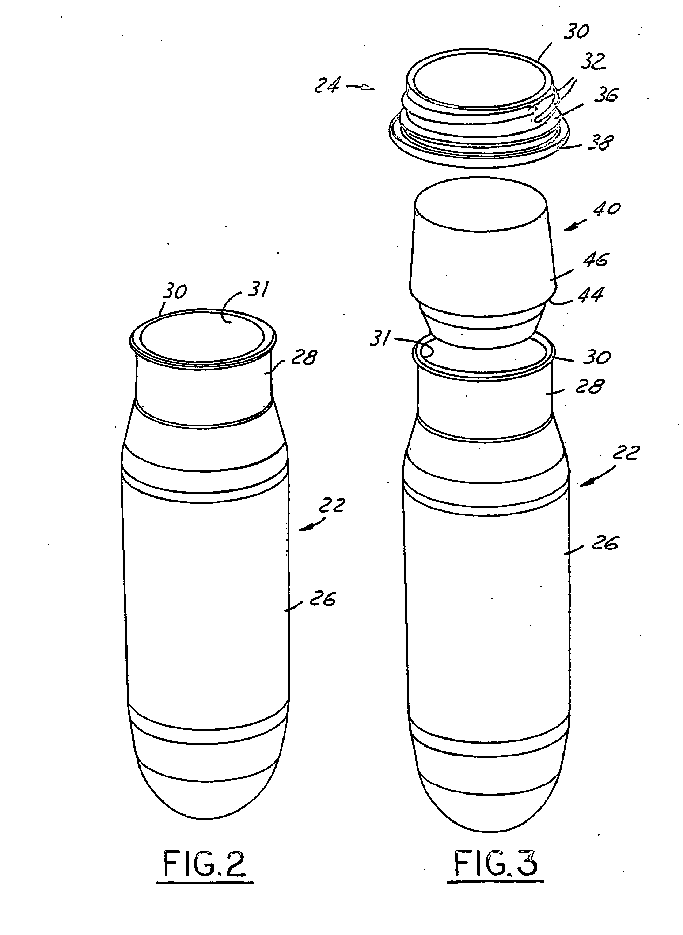

FIG. 1 illustrates a preform assembly 20 made in accordance with one presently preferred embodiment of the invention as including a preform 22 and a separate finish ring 24 secured thereto. As best seen in FIG. 2, preform 22 includes a body 26 having a closed lower end. (Directional words such as "upper" and "lower" are employed by way of description and not limitation with respect to the upright orientation of the preform and assembly illustrated in the drawings. Directional words such as "radial" and "circumferential" are employed by way of description and not limitation with respect to the central axis of the preform neck or finish ring as appropriate.) A neck 28, which typically is cylindrical, integrally extends from the upper end of preform body 26, and a flange 30 extends radially outwardly from the open end of neck 28. Neck 28 and flange 30 surround the open mouth 31 of preform 22. Finish ring 24 is circumferentially continuous, and preferably has one or more external threads or thread segments 32. In the illustrated preferred embodiment of the invention, finish ring 24 includes an annular wall 34 from which threads 32 protect. A tamper-indicating bead 36 extends radially outwardly from wall 34 beneath threads 32, and a capping or support flange 38 extends radiably outwardly from wall 34 beneath bead 36. As an alternative, capping flange 38 can be molded onto preform neck 28. The inside diameter of finish ring wall 34 is less than the outside diameter of flange 30, and is less than the outside diameter of preform body 26.

Finish ring 24 is assembled to preform 22 employing a tapered anvil 40 (FIGS. 3-5). Anvil 40 has a nose 42 sized for close receipt within preform mouth 31, and a shoulder 44 for abutting engagement with the upper surface of flange 30. The upper portion of anvil 40 has a tapered outer surface 46, preferably a conical outer surface, having a diameter at ledge 44 equal to or slightly greater than the outside diameter of flange 30, and an outside diameter at the remote end of surface 46 that is less than the inside diameter of finish ring 24. Finish ring 24 is warmed and pushed along surface 46 of anvil 40 resiliently to expand the diameter of the finish ring while warm. When the finish ring is moved past flange 30, the finish ring resiliently contracts around neck 28 of preform 22. The relaxed diameter or ring 24 preferably is such that ring 24 is retained by interference fit on neck 28 after expansion over anvil 40 followed by contraction onto neck 28 as said ring 24 cools. Adhesive or ultrasonic welding can also be employed, to enhance securement of ring 24 on preform 22. The finish and/or preform neck can be provided with suitable means for preventing rotation of the ring on the neck.

Preform 22 may be of any suitable plastic construction, such as monolayer PET or multilayer construction of PET layers alternating with layers of barrier resin such as ethylene vinyl alcohol (EVOH) or nylon. Preform 22 may be injection molded or compression molded. Likewise, finish ring 24 may be of injection or compression molded plastic construction. By providing finish ring 24 separate from preform 22, finish ring 24 may be of any desired material construction, either the same as or more preferably different from the material construction of preform 22. In other words, the material and conditions of fabrication of finish ring 24 may be selected separately from the material and manufacturing conditions of preform 22 to achieve desired operating characteristics at the finish area of the preform and the final container. Furthermore, the Preform can be molded with thin wall sections without having to accommodate flow of material into a thicker finish area, which reduces material cost and mold cycle time. Finish ring 24 may be of polypropylene (PP) construction, which has sufficient resiliency to expand over anvil 40 and then "snap" and shrink back onto preform neck 28 and be secured by interference shrink fit on the preform neck Polyester material, such as PET,PEN or process regrind, can be stretched while warm over anvil 40, and will shrink back onto preform neck 28 as the ring cools.

There have thus been disclosed a preform assembly and method of manufacture that fully satisfy all of the objects and aims previously set forth. The invention has been disclosed in conjunction with a exemplary presently preferred embodiment thereof and a number of modifications and variations have been described. Other modifications and variations will readily suggest themselves to persons of ordinary skill in the art. The invention is intended to embrace all such modifications and variations as fall within the scope of the appended claims.

## Claims

1. A method of making an assembly that includes the steps of:
(a) providing a molded plastic article (22) that has an open mouth (31), a neck (28) surrounding said mouth (31) with an external surface at a first diameter, an external flange (30) at one end of said neck (28) surrounding said mouth (31), and a body (26) integrally molded with said neck (28) at an end of said neck (28) spaced from said flange (30), said body (26) having a second external diameter greater than said first diameter;
(b) providing a circumferentially continuous molded plastic finish ring (24), and
(c) assembling said finish ring (24) to said article (22)
wherein the assembly is a preform assembly, the article (22) is a preform, and the body (26) is a preform body, and in that the assembling step (c) is carried out by stretching said finish ring (24) while warm over said external flange (30) to locate said finish ring (24) over said external surface of said neck (28) and by shrinkage of said ring (24) onto said neck (28) as said ring (24) cools such that said ring (24) is secured to said neck (28) between said flange (30) and said body (26) by interference shrink fit.

2. The method set forth in claim 1 wherein said step (c) is carried out by expanding said ring (24) over said flange (30) and then allowing said ring (24) to shrink onto said external surface of said neck (28).

3. The method set forth in claim 1 or claim 2 wherein said step (c) is carried out by:
(c1) positioning an anvil (40) over said mouth (31), said anvil (40) having an outer surface with a diameter at said flange (30) at least equal to that of said flange (30), and a diameter spaced from said flange (30) less than the inside diameter of said ring (24), and
(c2) expanding said ring (24) by sliding said ring (24) along said outer surface until said ring (24) snaps over said flange (30).

4. The method set forth in any one of claims 1 to 3 wherein said finish ring (24) is of polyester material selected from the group consisting of PET, PEN and process regrind.

5. The method set forth in any foregoing claim wherein step (b) further includes providing said circumferentially continuous molded plastic finish ring (24) with at least one external thread (32) and an external capping flange (38) at one axial end of said finish ring (24).

6. The method set forth in any foregoing claim wherein said plastic ring (24) is of a different material from said plastic preform (22).

7. The method set forth in any foregoing claim wherein said plastic finish ring (24) includes at least one external thread or thread segment (32).

8. The method set forth in any foregoing claim wherein said plastic finish ring (24) is of injection or compression molded plastic construction.

## Patentansprüche

1. Verfahren zur Herstellung einer Anordnung, umfassend die Schritte:
(a) Bereitstellen eines geformten Kunststoff-Gegenstands (22), der eine offene Öffnung (31), einen die Öffnung (31) umgebenden Stutzen (28) mit einer äußeren Oberfläche mit einem ersten Durchmesser, einen äußeren Flansch (30) an einem Ende des die Öffnung (31) umgebenden Stutzens (28) und einen Körper (26) besitzt, der an dem Stutzen (28) an einem vom Flansch (30) entfernten Ende des Stutzens (28) integral angeformt ist, wobei der Körper (26) einen zweiten Außendurchmesser besitzt, der größer als der erste Durchmesser ist;
(b) Bereitstellen eines in Umfangsrichtung durchgehenden geformten Kunststoff-Abschlussrings (24) ;
(c) Anordnen des Abschlussrings (24) an dem Gegenstand (22),
wobei die Anordnung eine Anordnung von Vorformlingen ist, der Gegenstand (22) ein Vorformling ist und der Körper (26) ein Vorformling-Körper ist, und wobei der Schritt des Anordnens (c) durchgeführt wird durch Spannen des Abschlussrings (24) über den äußeren Flansch (30) während er warm ist, um den Abschlussring (24) auf der äußeren Oberfläche des Stutzens zu positionieren und durch Schrumpfung des Rings (24) auf den Stutzen (28) während er abkühlt, so dass der Ring (24) am Stutzen (28) zwischen dem Flansch (30) und dem Körper (26) durch Schrumpf-Presssitz befestigt wird.

2. Verfahren nach Anspruch 1, wobei der Schritt (c) durchgeführt wird, indem der Ring (24) über dem Flansch (30) ausgedehnt wird und anschließend dem Ring (24) erlaubt wird, auf die äußere Oberfläche des Stutzens (28) zu schrumpfen.

3. Verfahren nach Anspruch 1 oder 2, wobei Schritt (c) ausgeführt wird durch:
(c1) Positionieren eines Ambosses (40) über der Öffnung (31), wobei der Amboss (40) eine äußere Oberfläche besitzt, deren Durchmesser an dem Flansch (30) wenigstens gleich dem des Flansches (30) ist, und deren vom Flansch (30) beabstandeter Durchmesser kleiner als der Innendurchmesser des Rings (24) ist, und
(c2) Ausdehnen des Rings (24) durch Schieben des Rings (24) entlang der äußeren Oberfläche, bis der Ring (24) über den Flansch (30) einrastet.

4. Verfahren nach einem der Ansprüche 1 bis 3, wobei der Abschlussring (24) aus einem Polyester-Material ist, das aus der Gruppe, bestehend aus PET, PEN und Prozess-Recycling-Mahlgut gewählt ist.

5. Verfahren nach einem vorstehenden Anspruch, wobei Schritt (b) weiter das Versehen des in Umfangsrichtung durchgehend geformten Kunststoff-Abschlussrings (24) mit wenigstens einem externen Gewinde (32) und einem externen Verschlussflansch (38) an einem axialen Ende des Abschlussrings (24) umfasst.

6. Verfahren nach einem vorstehenden Anspruch, wobei der Kunststoff-Ring (24) aus einem von dem Kunststoff-Vorformling (22) verschiedenen Material ist.

7. Verfahren nach einem vorstehenden Anspruch, wobei der Kunststoff-Abschlussring (24) wenigstens ein externes Gewinde oder Gewindesegment (32) umfasst.

8. Verfahren nach einem vorstehenden Anspruch, wobei der Kunststoff-Abschlussring (24) ein Spritzguss-Kunststoff-Formstück oder ein formgepresstes Kunststoff-Pormstück ist.

## Revendications

1. Procédé de réalisation d'un ensemble qui comprend les étapes consistant :
(a) à utiliser un article (22) moulé en matière plastique qui a une embouchure ouverte (31), un col (28) entourant ladite embouchure (31) avec une surface extérieure d'un premier diamètre, une collerette extérieure (30) à une extrémité dudit col (28) entourant ladite embouchure (31), et un corps (26) moulé d'une seule pièce avec ledit col (28) à une extrémité dudit col (28) espacée de ladite collerette (30), ledit corps (26) ayant un second diamètre extérieur supérieur audit premier diamètre ;
(b) à utiliser une bague (24) de finition moulée en matière plastique, circonférentiellement continue, et
(c) à assembler ladite bague (24) de finition sur ledit article (22),
dans lequel l'ensemble est un ensemble de préforme, l'article (22) est une préforme, et le corps (26) est un corps de préforme, et dans lequel l'étape d'assemblage (c) est exécutée en étirant ladite bague de finition (24) tandis qu'elle est chaude au-dessus de ladite collerette extérieure (30) pour placer ladite bague de finition (24) sur ladite surface extérieure dudit col (28) et en rétractant ladite bague (24) sur ledit col (28) pendant que ladite bague (24) refroidit afin que ladite bague (24) soit fixée audit col (28) entre ladite collerette (30) et ledit corps (26) par frettage.

2. Procédé selon la revendication 1, dans lequel ladite étape (c) est exécutée en expansant ladite bague (24) au-dessus de ladite collerette (30) puis en permettant à ladite bague (24) de se rétracter sur ladite surface extérieure dudit col (28).

3. Procédé selon la revendication 1 ou la revendication 2, dans lequel ladite étape (c) est exécutée en :
(c1) positionnant une enclume (40) au-dessus de ladite embouchure (31), ladite enclume (40) ayant une surface extérieure d'un diamètre, au niveau de ladite collerette (30), au moins égal à celui de ladite collerette (30), et d'un diamètre, à distance de ladite collerette (30), inférieur au diamètre intérieur de ladite bague (24), et
(c2) expansant ladite bague (24) en faisant coulisser ladite bague (24) le long de ladite surface extérieure jusqu'à ce que ladite bague (24) s'encliquette au-dessus de ladite collerette (30).

4. Procédé selon l'une quelconque des revendications 1 à 3, dans lequel ladite bague de finition (24) est en une matière du type polyester choisie dans le groupe constitué du PET, du PEN et d'une matière rebroyée de traitement.

5. Procédé selon l'une quelconque des revendications précédentes, dans lequel l'étape (b) comprend en outre le fait de pourvoir ladite bague (24) de finition moulée en matière plastique, circonférentiellement continue, d'au moins un filet extérieur (32) et d'une bride extérieure (38) de bouchage à une extrémité axiale de ladite bague (24) de finition.

6. Procédé selon l'une quelconque des revendications précédentes, dans lequel ladite bague (24) en matière plastique est en une matière différente de celle de ladite préforme (22) en matière plastique.

7. Procédé selon l'une quelconque des revendications précédentes, dans lequel ladite bague (24) de finition en matière plastique comporte au moins un filet ou segment de filet extérieur (32).

8. Procédé selon l'une quelconque des revendications précédentes, dans lequel ladite bague (24) de finition est réalisée en matière plastique moulée par injection ou compression.
